# DEMANDE DE BREVET EUROPEEN

(11) **EP 1 717 540 A1**
(43) Date de publication de la demande: **02.11.2006**
(21) Numéro de dépôt: 06290489.1
(22) Date de dépôt: 28.03.2006
(51) Int. Cl.: F41A 23/20, B60P 1/54

(54) **Véhicule militaire comprenant une tourelle mobile**

(30) Priorité: 29.04.2005 FR 0504384
(71) Demandeur: CONSTRUCTIONS INDUSTRIELLES DE LA MEDITERRANEE- CNIM, F-75008 Paris (FR)
(72) Inventeur: Richeux, Elisabeth, 13600 La Ciotat (FR)
(74) Mandataire: Delaveau, Sophie

(57) **Abrégé**

L'invention concerne un véhicule militaire comprenant une tourelle armée (6) et un bras mobile (7) apte à déplacer cette tourelle armée (6).

Le véhicule est équipé d'un système de préhension apte à solidariser la tourelle armée (6) à une extrémité du bras mobile (7). Ce système de préhension comprend une partie mâle solidaire de l'extrémité du bras mobile (7) et une partie femelle solidaire de la tourelle armée (6), cette partie mâle pouvant être verrouillée mécaniquement dans la partie femelle grâce à au moins un verrou actionné par un dispositif hydraulique.

L'invention s'applique à l'autodéfense de véhicules militaires conçus destinés à effectuer des travaux du type génie.

## Description

L'invention a pour objet un véhicule militaire comprenant une tourelle armée et un bras mobile apte à recevoir différents outils.

Ce type de véhicule qui est blindé est utilisé notamment pour effectuer des travaux de génie. Un tel véhicule est notamment amené à intervenir dans des zones cloisonnées comme par exemple entre des immeubles ou autres constructions existantes d'une ville.

La tourelle armée qui est généralement montée sur le toit est destinée à des tirs défensifs, mais effectuer un tir nécessite en général de déplacer l'ensemble du véhicule pour que la tourelle occupe une position permettant au tir d'atteindre la cible. Dans cette situation, le véhicule court le risque important de s'exposer à l'ennemi pour riposter.

Le but de l'invention est de prévoir une conception permettant de réduire les déplacements nécessaires que doit effectuer le véhicule lorsqu'il doit riposter, de manière à exposer le moins possible le véhicule à l'ennemi dans une telle situation.

A cet effet, l'invention a pour objet un véhicule militaire comprenant une tourelle armée, un bras mobile, un système de préhension pour solidariser la tourelle armée à une extrémité du bras mobile, ce système de préhension comprenant une partie mâle solidaire de l'extrémité du bras mobile et une partie femelle solidaire de la tourelle armée, dans lequel cette partie mâle peut être verrouillée mécaniquement dans la partie femelle grâce à au moins un verrou actionné par un dispositif hydraulique.

Lorsque le véhicule doit effectuer un tir de riposte, la tourelle armée peut être déplacée par le bras pour effectuer le tir directement depuis l'extrémité du bras, de sorte qu'il n'est pas nécessaire de déplacer le véhicule.

Selon une caractéristique de l'invention, le véhicule comprend au moins deux supports aptes à recevoir la tourelle armée, chaque support comprenant une partie mâle, et la tourelle comprend une seconde partie femelle apte à être bloquée dans la partie mâle de l'un ou l'autre des supports.

La tourelle peut ainsi être déplacée par le bras depuis un support du véhicule vers un autre support du véhicule pour effectuer le tir depuis cet autre support,

Selon une autre caractéristique de l'invention, chaque partie femelle et chaque partie mâle incluent chacune au moins un connecteur hydraulique et/ou électrique pour connecter hydrauliquement et/ou électriquement la partie mâle à la partie femelle, et dans lequel le dispositif hydraulique déplace chaque verrou et chaque connecteur de la partie mâle simultanément lorsqu'il est actionné, de manière à engager les connecteurs de la partie mâle sur les connecteurs de la partie femelle.

Selon une autre caractéristique de l'invention, au moins un connecteur de la partie mâle est protégé par une trappe qui est fermée lorsque que cette partie mâle est libérée et que le dispositif hydraulique de verrouillage est dans un état déverrouillé.

Selon une autre caractéristique de l'invention, le véhicule comprend au moins un support apte à recevoir la tourelle armée, qui est indexé, et des moyens de pilotage du bras et du système de préhension permettant la préhension par le bras de la tourelle armée sur son support indexé et/ou la dépose de la tourelle armée sur un autre support indexé, de façon automatisée.

Selon une autre caractéristique de l'invention, la tourelle armée comprend une platine sur laquelle sont montés d'une part la partie femelle de préhension, et d'autre part un tourelleau de tir rotatif.

Selon une autre caractéristique de l'invention, le véhicule comprend en outre un outil équipé d'une partie femelle de système de préhension, cet outil étant un godet, une tarière, une nacelle dans laquelle une personne peut être embarquée, un brise-béton, ou un outil de mise en place d'une travure de franchissement d'obstacle.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
La figure 1 est une première vue générale du véhicule selon l'invention ;
La figure 2 est une seconde vue générale du véhicule selon l'invention ;
La figure 3 montre la solidarisation de l'extrémité de bras à la tourelle ;
La figure 4 montre la partie femelle du dispositif de préhension ;
La figure 5 montre la partie mâle du dispositif de préhension dans un état verrouillé ;
La figure 6 montre la partie mâle du dispositif de préhension dans un état déverrouillé ;
La figure 7 montre la partie mâle verrouillée dans la partie femelle ;
La figure 8 montre le retrait par le bras mobile de la tourelle armée ;
La figure 9 montre la dépose de la tourelle sur un second support ;
La figure 10 montre le désaccouplement de l'extrémité du bras après dépose de la tourelle sur le second support.

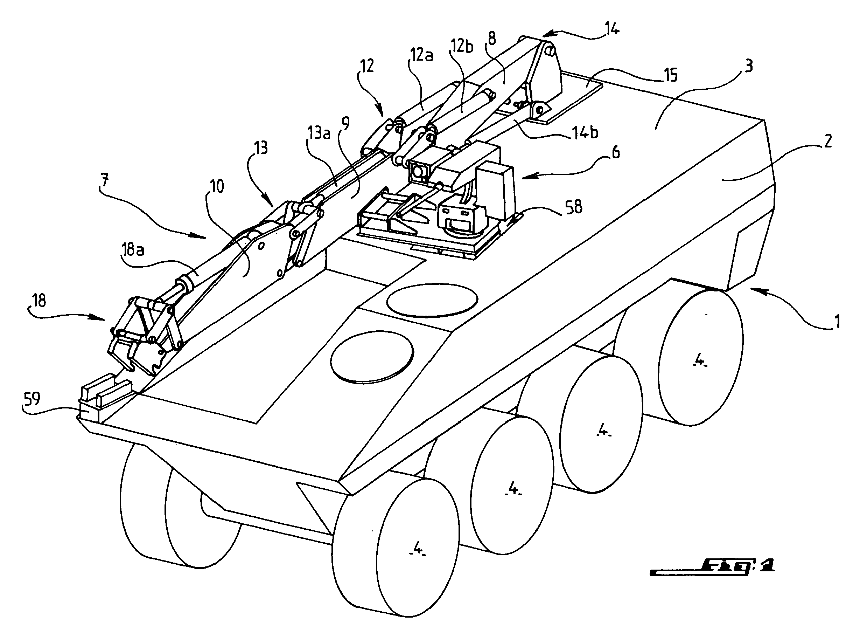

La figure 1, montre un véhicule militaire blindé 1, destiné à effectuer des travaux tels que des travaux de génie. Ce véhicule 1 comprend un blindage externe 2 incluant une partie supérieure ou toit 3. Il s'agit ici d'un véhicule comprenant huit roues repérées par 4, mais l'invention s'applique à un véhicule à chenilles ou autre.

Ce véhicule est équipé d'une tourelle armée 6 qui sera détaillée plus bas, et d'un bras mobile 7 apte à saisir notamment différents outils de génie non représentés pour effectuer des travaux. Ce bras mobile comprend une première, une seconde et une troisième parties repérées par 8, 9, et 10, qui sont articulées les unes par rapport aux autres.

Ce bras 7 comprend plus particulièrement une première articulation repérée par 12, située sensiblement vers l'arrière du bras 7, c'est-à-dire entre la première et la seconde partie 8, 9, cette articulation 12 pouvant être actionnée par deux vérins correspondants parallèles repérés par 12a et 12b.

Une seconde articulation repérée par 13 relie la seconde partie 9 à la troisième partie 10 du bras 7, cette seconde articulation 13 pouvant être actionnée par un vérin repéré par 13a.

Ce bras 7 a son extrémité arrière, c'est-à-dire sa première partie 8, solidarisée par une troisième articulation 14 à une embase 15. L'embase 15 étant solidarisée à une zone arrière du toit 3 du véhicule tout en étant apte à pivoter autour d'un axe vertical. La troisième articulation 14 peut être déplacée par deux vérins correspondants 14a et 14b.

Le bras 7 est encore équipé à son extrémité avant, qui est l'extrémité avant de la troisième partie 10, d'une tête 21 destinée à être solidarisée notamment à un outil, cette tête étant elle-même articulée par rapport à la troisième partie 10 du bras 7 au moyen d'une quatrième articulation repérée par 18, et qui est déplacée par un vérin correspondant 18a.

L'extrémité avant du bras peut ainsi être déplacée dans un espace délimité par une surface sensiblement sphérique, grâce aux articulations 12, 13 et 14 qui autorisent des mouvements de rotation des parties 8, 9 et 10 les unes par rapport aux autres selon des axes horizontaux parallèles et grâce à l'embase pivotante 15 par laquelle le bras peut pivoter autour d'un axe vertical coïncidant sensiblement avec son extrémité arrière.

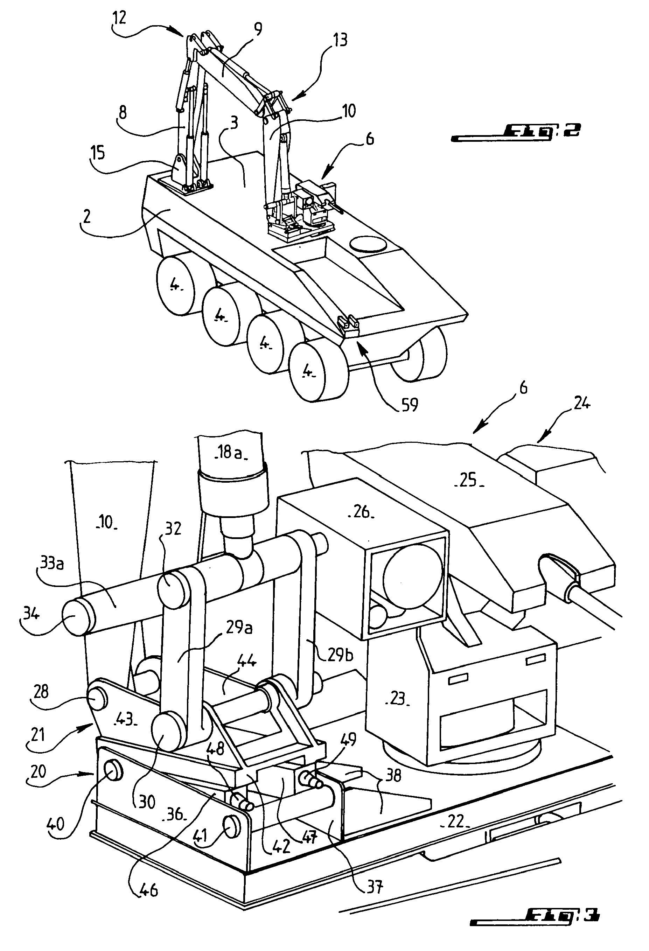

Dans la figure 1, le bras 7 s'étend horizontalement le long d'une zone supérieure droite du toit 3, et dans la figure 2, ce bras est replié et conformé de telle manière que son extrémité avant est située au niveau de la tourelle armée 6.

Selon l'invention, l'extrémité avant du bras 7 et la tourelle armée 6 sont munis de moyens de préhension permettant d'accoupler cette tourelle à l'extrémité avant du bras 7 pour la déplacer de manière à effectuer des tirs depuis différentes localisations sans déplacement du véhicule.

Ce moyen de préhension comprend une partie mâle et une partie femelle aptes à être solidarisées l'une à l'autre de manière automatisée.

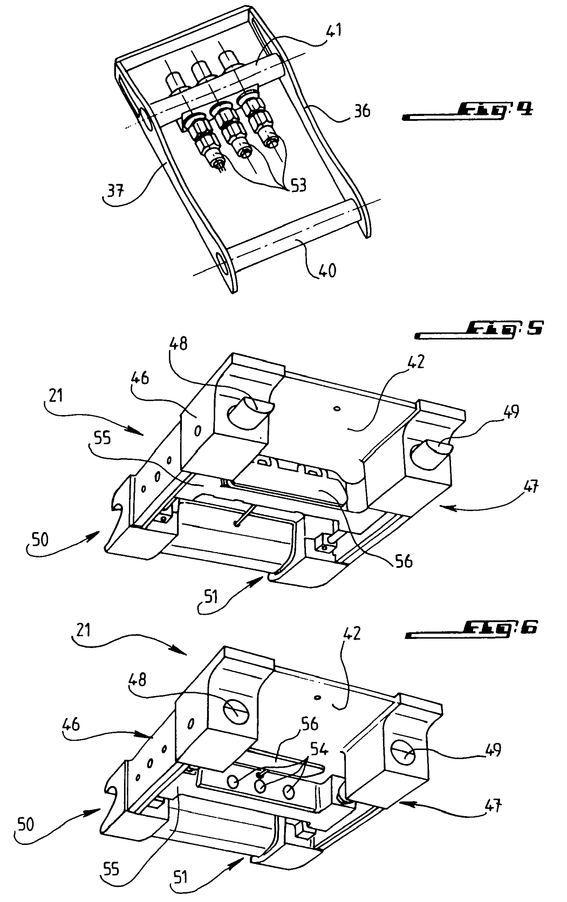

La partie femelle 20 est solidaire de la tourelle 6, et la partie mâle 21 qui est solidaire de l'extrémité avant du bras mobile 7, ce qui est visible notamment sur la figure 3.

Sur les figures 2 et 3, la tourelle est bloquée dans un premier support du véhicule situé sensiblement au centre du toit 3. Comme visible figure 3, cette tourelle 6 comprend une platine 22 sur laquelle est monté un berceau 23 apte à pivoter autour d'un axe vertical par rapport à la platine 22. Le berceau 23 porte ici une tête 24 incluant notamment une mitrailleuse 25 ainsi que différents autres éléments tels que l'organe de visée repéré par 26.

La partie mâle 21 a sa partie arrière solidarisée à la partie 10 du bras mobile 7 par une articulation lui permettant de pivoter autour d'un premier axe horizontal 28. Cette partie mâle 21 a sa partie avant solidarisée aux extrémités de deux biellettes latérales 29a et 29b par un second axe 30 qui est également horizontal.

Les deux biellettes latérales 29a et 29b ont leurs deux autres extrémités solidarisées à l'extrémité avant du vérin 18a par un troisième axe 32, qui est également horizontal. Le troisième axe 32 est lui-même relié à l'extrémité avant du bras 7 par deux autres biellettes latérales, dont l'une, 33a est visible sur la figure 3. Ces deux autres biellettes latérales sont elles-mêmes articulées sur la troisième partie de bras 10 par un quatrième axe 34 qui est également horizontal.

L'ensemble constitué par la troisième partie 10 du bras 7, la partie mâle 21 et les différentes biellettes, reliées par les quatre axes 28, 30, 32 et 34, constitue ainsi un parallélogramme déformable pouvant être actionné par le vérin 18a qui est apte à déplacer le troisième axe 32.

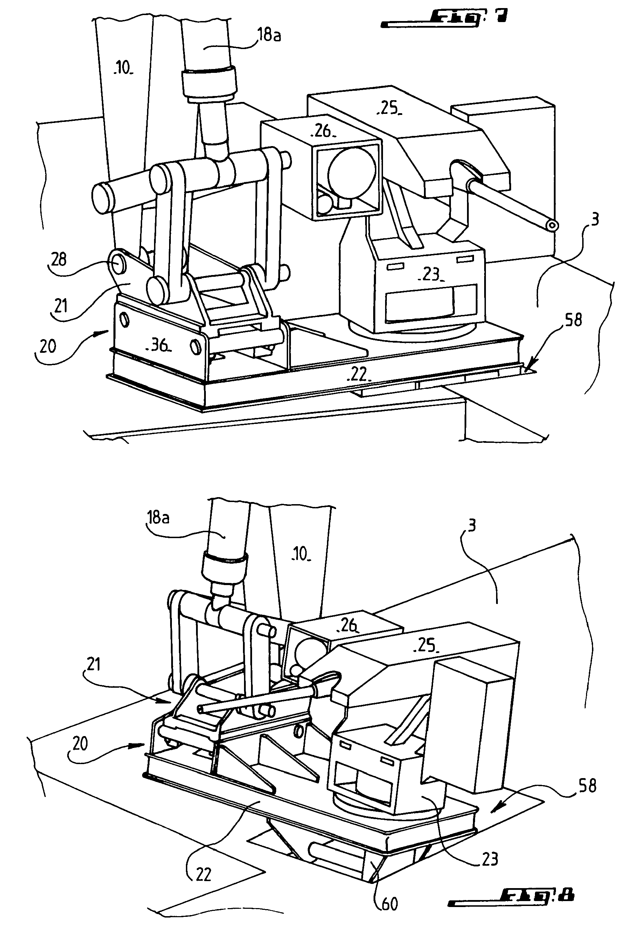

La partie femelle 20 de l'élément de préhension qui est solidaire de la platine 22 est représentée plus en détail en figure 4. Elle comprend principalement deux flasques sensiblement rectangulaires, verticaux et parallèles l'un à l'autre, repérés par 36 et 37. Comme visible figure 3, des éléments de renfort triangulaires 38 sont soudés à la platine 22 et au flasque 37 tout en s'étendant selon des plans normaux à la platine et au flasque de manière à maintenir ce flasque dans son plan à l'encontre des efforts mécaniques qu'il subit.

Deux tiges 40, 41 parallèles l'une à l'autre et normales aux flasques 36 et 37 sont montées entre ces deux flasques, en ayant chacune une extrémité soudée à un flasque. La tige 40 est montée vers l'arrière des flasques, la tige 41 étant située vers l'avant de ces flasques.

Comme visible figure 2, la partie mâle 21 comprend un socle 42 sur lequel sont fixés deux flasques parallèles 43, 44 qui s'étendent verticalement en étant rigidement solidarisés à la face supérieure de ce socle 42. Les premier et second axe 28, 30 sont solidarisés à ces deux flasques.

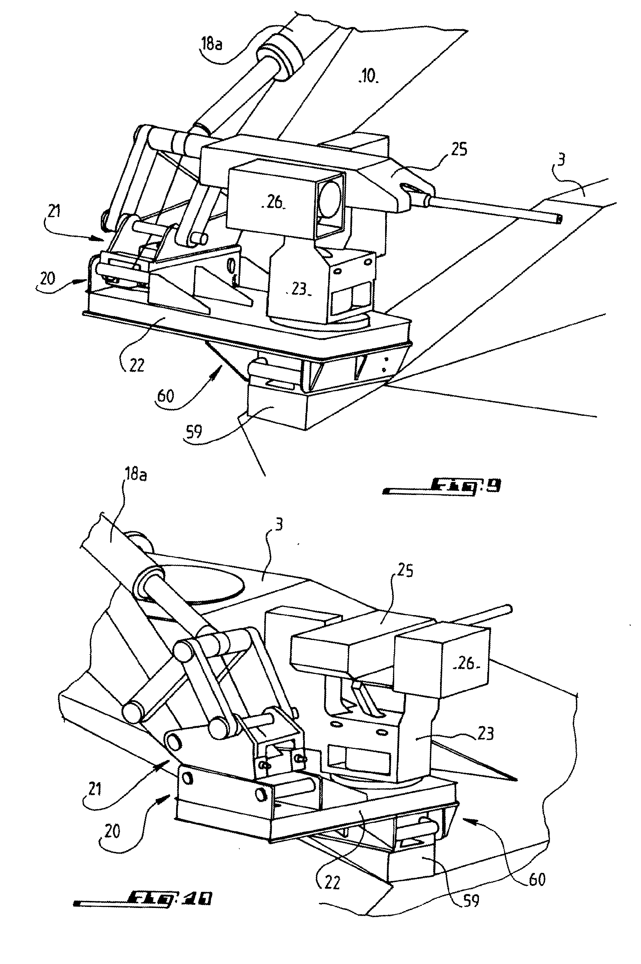

Cette partie mâle 21 comprend encore différents organes fixés à la face inférieure du socle 42 qui apparaissent sur les figures 5 et 6. Ces organes comprennent deux longerons 46 et 47 qui s'étendent sensiblement au droit des flasques supérieurs 43 et 44, respectivement.

Chaque longeron 46, 47 comprend un téton mâle ou verrou, respectivement 48, 49, actionnés conjointement par un moyen hydraulique tel qu'un vérin. Ces deux verrous sont aptes à être déployés pour dépasser au-delà de l'extrémité avant du longeron correspondant, comme c'est le cas dans les figures 3 et 5, ou à être rétractés de manière à ne pas dépasser, comme dans la figure 6.

Les deux longerons 46, 47 comprennent en leur partie arrière une encoche 50, 51 prévue pour s'engager sur la tige arrière 40 de la partie femelle 20 pour permettre le blocage de la partie mâle 21 sur cette partie femelle 20.

La solidarisation de la partie mâle 21 dans la partie femelle 20, consiste dans un premier temps à manoeuvrer le bras 7 pour approcher la partie mâle 21 de la partie femelle 20 jusqu'à engagement des encoches 50, 51 sur la tige arrière 40, ce qui correspond à la situation de la figure 3. Ensuite, les verrous 48 et 49 sont rétractés et la partie mâle 21 est abaissée au moyen du vérin 18a, jusqu'à positionner le socle 42 sensiblement parallèle à la platine 22, dans un mouvement de rotation de la partie mâle 21 autour de la tige 40.

Après le positionnement du socle 42 parallèlement à la platine 22, les verrous 48, 49 sont déployés pour se bloquer sous la tige avant 41, ce qui correspond à un état mécaniquement verrouillé de la partie mâle 21 dans la partie femelle 20 du dispositif de préhension, représenté en figure 7.

L'accouplement de la partie mâle 21 à la partie femelle 20 assure également la connexion hydraulique et/ou électrique de la partie mâle avec la partie femelle dès que le ou les vérins de la partie mâle sont actionnés pour déployer les verrous 48 et 49.

Comme visible figure 4, la partie femelle 20 comprend plusieurs connecteurs repérés par 53 qui sont fixés à la tige avant 41 en s'étendant parallèlement à la direction générale des flasques. La partie mâle 21 comprend également des connecteurs complémentaires 54 qui sont solidaires d'un tiroir coulissant 55 qui est déplacé en translation avec les verrous 48, 49 lorsque ceux-ci sont déplacés par les moyens hydrauliques.

Comme visible sur les figures 5 et 6, les connecteurs complémentaires 54 sont protégés par une trappe mobile 56 qui est liée en mouvement avec le tiroir 55. Cette trappe 56 occupe une position dans laquelle elle couvre ces connecteurs 54 lorsque la partie mâle 21 n'est pas engagée dans une partie femelle correspondante alors que le tiroir 55 est en position verrouillée, comme dans la figure 5. Cette trappe occupe une autre position dans laquelle elle découvre les connecteurs 54 lorsque le tiroir 55 est en position déverrouillée, comme dans la figure 6.

Lorsque la partie mâle 21 est engagée dans la partie femelle 20, le tiroir 55 est placé en position déverrouillée par le moyen hydraulique pour que la trappe 56 découvre les connecteurs 54 et pour escamoter les verrous 48 et 49. La partie mâle 21 est alors abaissée dans la partie femelle 20 de telle manière que le socle 42 soit parallèle à la platine 22.

Dans cette situation, les connecteurs 53 de la partie femelle 20 sont situés au droit des connecteurs complémentaires 54 du tiroir 55. L'actionnement du moyen hydraulique pour déployer les verrous 48, 49 a aussi pour effet de déplacer le tiroir 55 pour engager les connecteurs 54 durant ce mouvement sur les connecteurs 53. La trappe 56 est alors maintenue ouverte par les connecteurs 53 sur lesquels elle est en appui, et le long desquels elle glisse lorsque le tiroir coulissant est déplacé.

Dans cette situation, qui est celle de la figure 7, l'accouplement de la partie mâle 21 avec la partie femelle 20 ainsi que la connexion de la partie mâle à la partie femelle sont réalisés sans qu'une intervention humaine à l'extérieur du blindage 2 n'ait été nécessaire.

D'autres possibilités peuvent être envisagées pour l'ouverture de la trappe 56 : elle peut être notamment ouverte par exemple mécaniquement lorsque la partie mâle est abaissée dans la partie femelle.

Les connecteurs 53, 54 comprennent avantageusement des connecteurs hydrauliques et/ou électriques, et/ou pneumatiques pour transférer de l'énergie hydraulique et/ou électrique et/ou pneumatique depuis le bras 7 vers la tourelle armée 6. Ils comprennent également des connecteurs électroniques pour transmettre des données depuis l'intérieur du véhicule vers la tourelle 6, et réciproquement. Les alimentations hydraulique, électrique électronique et éventuellement pneumatique cheminent à l'intérieur du bras 7 jusqu'à son extrémité.

Dans la situation de la figure 7, la tourelle 6 est solidarisée à l'extrémité du bras 7, elle est ensuite désolidarisée du premier support 58, ce qui est illustré sur la figure 8 soit pour être positionnée sur le second support du véhicule, repéré par 59, soit pour effectuer directement un tir depuis l'extrémité du bras 7.

Ce second support est situé à l'avant droite du véhicule et est visible notamment sur les vues d'ensemble 1 et 2.

Comme visible figure 8, la tourelle 6 qui comprend une première partie femelle 20 détaillée plus haut, située sur la face supérieure de la platine 22, est également équipée d'une seconde partie femelle, repérée par 60, et qui est fixée à la face inférieure de la platine 22 pour assurer la solidarisation de la tourelle 6 au support 58 ou au support 60.

A cet effet, les supports 58 et 59 comprennent chacun une partie mâle correspondante, non repérée sur les figures, qui est analogue à la partie mâle 21 équipant l'extrémité du bras 7 détaillée plus haut. Ces deux autres parties mâles comprennent également des verrous et des contacteurs actionnées par des organes hydrauliques.

Après solidarisation de l'extrémité du bras 7 à la tourelle par accouplement de la partie 20 sur la partie 21, la partie mâle du support 58 est commandée pour être déverrouillée de manière à permettre l'enlèvement de la tourelle 6, ce qui est représenté sur la figure 8.

Cet enlèvement est réalisé d'abord par un mouvement de rotation de la tourelle 6 pour écarter la partie avant de la partie femelle 60 de la tige correspondante du support 58. Dans une seconde étape, la tourelle 6 est déplacée vers l'avant sur les figures de manière à dégager les encoches de la tige arrière non visible sur les figures.

La tourelle 6 est ensuite déplacée par le bras 7 vers le second support 59 pour être positionnée et bloquée dans ce dernier, selon une suite d'opérations du même type que celles détaillées plus haut, consistant principalement à engager la partie femelle inférieure 60 dans la partie mâle correspondante du support 59, puis à verrouiller cette dernière partie mâle avec ses connecteurs.

Le bras 7 peut alors être désaccouplé de la tourelle 6 pour être soit replié, soit utilisé à une autre fin.

Comme indiqué précédemment, les parties mâles du premier et du second support 58 et 59 comprennent, tout comme la partie mâle 21 située en extrémité du bras 7, des connecteurs assurant les connexions nécessaires avec la partie femelle inférieure 60 de la tourelle 6 dès verrouillage des moyens hydrauliques correspondants. La tourelle 6 est ainsi opérationnelle pour effectuer des tirs, lorsqu'elle est bloquée dans le premier support 58, lorsqu'elle est dans le second support 60, et lorsqu'elle est bloquée à l'extrémité du bras 7.

En ce qui concerne le bras mobile 7, celui-ci est avantageusement brêlé sur un support en position de tir afin de limiter les effets de recul des tirs.

Le véhicule peut comprendre d'autres supports aptes à recevoir la tourelle. Avantageusement, les différents supports sont indexés de sorte que les opérations de positionnement du bras et d'accouplement du bras avec la tourelle sont réalisées de façon entièrement automatisée, grâce à un dispositif à commande numérique apte à piloter les mouvements du bras 7.

Les supports aptes à recevoir la tourelle 6 peuvent avantageusement être eux-mêmes montés sur une couronne rotative de manière à permettre des tirs déportés.

Plus particulièrement, la mise en oeuvre de différents supports sur le véhicule offre la possibilité d'effectuer des tirs depuis différents points du véhicule ayant chacun une assise stable, c'est à dire grâce à laquelle le recul dû au tir est sensiblement nul, ce qui permet d'améliorer la précision de tir.

Ainsi, grâce à l'invention, le bras mobile du véhicule, qui est prévu pour saisir différents outils de génie, tels qu'une tarière, une nacelle pouvant contenir des personnes, un godet, un brise-béton, ou encore un outil de mise en place d'une travure de franchissement d'obstacle, est également exploité pour améliorer les conditions de défense en permettant à ce bras de déplacer la tourelle armée 6 pour effectuer soit des tirs depuis l'extrémité de ce bras, c'est à dire depuis un point situé dans la zone pouvant être balayée par ce bras, soit depuis l'un des différents supports de tourelle tels que le premier et le second support de tourelle représentés sur les figures.

## Revendications

1. Véhicule (1) militaire comprenant une tourelle armée (6), un bras mobile (7), un système de préhension (20, 21) pour solidariser la tourelle armée (6) à une extrémité du bras mobile (7), ce système de préhension comprenant une partie mâle (21) solidaire de l'extrémité du bras mobile (7) et une partie femelle (20) solidaire de la tourelle armée (6), dans lequel cette partie mâle (21) peut être verrouillée mécaniquement dans la partie femelle (20) grâce à au moins un verrou (48, 49) actionné par un dispositif hydraulique.

2. Véhicule selon la revendication 1, comprenant au moins deux supports (58, 59) aptes à recevoir la tourelle armée (6), dans lequel chaque support (58, 59) comprend une partie mâle et dans lequel la tourelle (6) comprend une seconde partie femelle (60) apte à être bloquée dans la partie mâle (21) de l'un ou l'autre des supports (58, 59).

3. Véhicule selon la revendication 1 ou 2, dans lequel chaque partie femelle (20) et chaque partie mâle (21) incluent chacune au moins un connecteur hydraulique (53, 54) et/ou électrique pour connecter hydrauliquement et/ou électriquement la partie mâle (21) à la partie femelle (20), et dans lequel le dispositif hydraulique déplace chaque verrou (48, 49) et chaque connecteur (53, 54) de la partie mâle (21) simultanément lorsqu'il est actionné, de manière à engager les connecteurs (54) de la partie mâle (21) sur les connecteurs (53) de la partie femelle (20).

4. Véhicule selon la revendication 3, dans lequel au moins un connecteur (54) de la partie mâle (21) est protégé par une trappe (56) qui est fermée lorsque que cette partie mâle est libérée et que le dispositif hydraulique de verrouillage est dans un état déverrouillé.

5. Véhicule selon l'une des revendications précédentes, comprenant au moins un support (58, 59) apte à recevoir la tourelle armée (6), qui est indexé, et des moyens de pilotage du bras (7) et du système de préhension (20, 21) permettant la préhension par le bras (7) de la tourelle armée (6) sur son support indexé (58, 59) et/ou la dépose de la tourelle armée (6) sur un autre support indexé (58, 59), de façon automatisée.

6. Véhicule selon l'une des revendications précédentes, dans lequel la tourelle armée (6) comprend une platine (22) sur laquelle sont montés d'une part la partie femelle (20) de préhension, et d'autre part un tourelleau de tir rotatif (23, 25).

7. Véhicule selon l'une des revendications précédentes, comprenant en outre un outil équipé d'une partie femelle de système de préhension, cet outil étant un godet, une tarière, une nacelle dans laquelle une personne peut être embarquée, un brise-béton, ou un outil de mise en place d'une travure de franchissement d'obstacle.
